# EUROPÄISCHE PATENTSCHRIFT

(11) **EP 3 939 766 B1**
(45) Veröffentlichungstag und Bekanntmachung des Hinweises auf die Patenterteilung: **22.11.2023**
(21) Anmeldenummer: 20186446.9
(22) Anmeldetag: 17.07.2020
(51) Int. Cl.: B29C 48/00, B26D 1/09, B26D 5/00, B26D 7/18, B29C 48/12, B29C 48/28, B29C 48/92, B29D 99/00

(54) **VERFAHREN ZUR HERSTELLUNG EINES PROFILSTRANGS SOWIE FERTIGUNGSEINRICHTUNG ZUR HERSTELLUNG EINES PROFILSTRANGS**
METHOD FOR PRODUCING A PROFILED STRIP AND MANUFACTURING DEVICE FOR PRODUCING A PROFILED STRIP
PROCÉDÉ DE FABRICATION D'UNE BANDE PROFILÉE AINSI QUE DISPOSITIF DE FABRICATION PERMETTANT DE FABRIQUER UNE BANDE PROFILÉE

(43) Veröffentlichungstag der Anmeldung: 19.01.2022
(73) Patentinhaber: Eldisy GmbH, 39638 Gardelegen (DE)
(72) Erfinder: GÄDE, Daniel, 21271 Asendorf (DE); BARTH, Stefan, 39649 Gardelegen/ OT Mieste (DE)
(74) Vertreter: btb IP Bungartz Baltzer Partnerschaft mbB Patentanwälte

(56) Entgegenhaltungen:
- EP-A1- 3 431 250
- WO-A1-2017/125156
- DE-A1-102016 123 487

## Beschreibung

Die Erfindung betrifft ein Verfahren zur Herstellung eines einem Lieferspeicher zugeführten, fehlstellenfreien Endlos-Profilstrangs aus einem Weichkunststoff- und/oder Gummimaterial zur weiteren Verwendung als Dichtungsprofil, Kantenschutzprofil oder dergleichen an einem Kraftfahrzeug. Die Erfindung betrifft ferner eine Fertigungsanlage zur Herstellung eines derartigen Profilstrangs.

Aus den Druckschriften EP 2 419 239 A1, EP 3 218 159 A1, EP 3 431 250 A1 und EP 1 733 839 A1 sind verschiedene Verfahren zur Herstellung von derartigen Profilsträngen sowie Fertigungseinrichtungen zur Herstellung derartiger Profilstränge bekannt.

Die im Stand der Technik beschriebenen Verfahren beschäftigen sich dabei mit der Herstellung von auf Rollen aufzuwickelnden EndlosProfilsträngen bei einem Fahrzeugzulieferer (dem Profilstranghersteller) und der späteren Verarbeitung des beim Fahrzeughersteller als Endlosstrang von der Rolle wieder abzuwickelnden und abzulängenden Profilstrangs sowie dessen Anbringung am Kraftfahrzeug. Die an den Fahrzeughersteller mit dem Profilstrang befüllten Rollen stellen dabei Lieferspeicher in Sinne der Erfindung dar, also Einrichtungen, auf denen ein Endlos-Profilstrang von typischerweise mehreren hundert Metern bis über tausend Meter Länge durch Aufwickeln in einer Weise "gespeichert" wird, die die kompakte, zusammenhängende Lieferung an den Fahrzeughersteller ermöglicht und gewährleistet, dass der Fahrzeughersteller den Lieferspeicher auf einfache Weise in die bei ihm anzutreffende Produktionslinie integrieren kann.

Im Fokus der im Stand der Technik beschriebenen Verfahren steht unter anderem das Heraustrennen und/oder das Markieren von während des kontinuierlichen Herstellungsprozesses entstandenen Fehlstellen sowie außerdem die Identifizierbarmachung von Verbindungsstellen, die durch das nachträgliche Fügen freier stirnseitiger Trennenden benachbarter Profilstrangabschnitte erzeugt werden, die infolge des Heraustrennens der Fehlstellen entstanden sind. Die Offenlegungsschrift DE 10 2016 123 487 A1 beschreibt ein Verfahren zur Herstellung eines einem Lieferspeicher zugeführten Endlos-Profilstrangs, bei dem Fehlstellen vor dem Aufwickeln auf den Lieferspeicher markiert werden und Fehlstellen größerer Länge herausgetrennt werden.

Fehlstellen sind dabei als in der Herstellung unbeabsichtigt entstehende und im Produktionsprozess beim Profilstranghersteller zu entfernende Herstellungsfehler zu verstehen (Oberflächenbeschädigungen, Lunker, Materialfehler, Lackierfehler, Blasen, "Pickel", etc.), während Verbindungsstellen nach Heraustrennen der Fehlstellen oder zur Bildung eines in sich geschlossenen Profilsstrangrings nach Ablängen eines Profilsstrangabschnitts durch das Fügen zweier Trennenden gezielt erzeugt werden. Eine Verbindungsstelle ist demnach nicht als Fehlstelle zu verstehen. Wann genau eine Stelle als Fehlstelle als herauszutrennende Fehlstelle zu klassifizieren und vom Profilstranghersteller aus dem Profilstrang herauszutrennen ist, hängt vor allem von den Vorgaben des Fahrzeugherstellers ab. Abhängig von Fahrzeugklassen (Kleinwagen, Mittel- oder Luxusklasse) sowie abhängig vom jeweiligen Fahrzeughersteller können die Vorgaben variieren.

Von derartigen bei einem Profilstranghersteller durchgeführten Herstellungsverfahren und von bei einem Profilstranghersteller befindlichen Fertigungsanlagen geht auch die vorliegende Erfindung aus.

Trotz der gezielten Erzeugung der Verbindungsstellen wird im Stand der Technik davon ausgegangen, dass bei Endlosprofilsträngen die Verbindungsstellen beim Fahrzeughersteller aus einem Endlosstrang herausgetrennt werden. Dem liegt Annahme zugrunde, dass die Verbindungsstelle die Funktion des Profilsstrangs beeinträchtigen könnte, etwa weil diese Undichtigkeiten verursachen könnte, oder infolge ihrer Sichtbarkeit einen für den Fahrzeugkäufer nicht akzeptablen, minderen Qualitätseindruck vermittelt. Zum Zwecke des automatisierten Heraustrennens von Verbindungsstellen beim Fahrzeughersteller kann vorgesehen sein, Verbindungsstellen beim Profilstranghersteller zu markieren - etwa mit metallischen Markern oder mit Farbmarkierungen - und dadurch für die bei dem Fahrzeughersteller verwendete Anlage in einfacher Weise identifizierbar zu machen.

Nachteilig an den bekannten Verfahren ist, dass diese Verfahren es für den Fahrzeughersteller nach wie vor erforderlich macht, Verbindungsstellen an der Fahrzeugproduktionslinie zu identifizieren, da die markierten Verbindungsstellen nicht an dem letztlich am Fahrzeug anzubringenden Profilsstrangabschnitt verbleiben sollen, sondern vor der Endmontage herauszutrennen sind. Die bedeutet einen erhöhten Produktionsaufwand beim Fahrzeughersteller und macht eine teurere Produktionstechnik beim Fahrzeughersteller erforderlich, etwa Kameras oder sonstige zur Detektieren von Verbindungsstellen sowie Trenneinrichtungen zum Heraustrennen von Verbindungsstellen und gegebenenfalls eine Fügeeinrichtung zum wieder Verbinden der beim Heraustrennen entstandenen Trennenden eines zu verbauenden Profilstrangabschnitts.

Anders als im Stand der Technik bisher angenommen, kann es jedoch erstrebenswert sein, eine Verbindungsstelle vor der Montage eines Dichtungsstrangabschnitts am Kraftfahrzeug nicht herauszutrennen, sondern schlicht an dem am Fahrzeug anzubringenden Profilsstrangabschnitt zu belassen. Dies ermöglicht schnellere Zykluszeiten, eine geringere Produktionskomplexität und weniger Ausschuss. Bei der Herstellung des Profilsstrangs kann bei ausreichender Prozesssicherheit und Qualität der Verbindungsstelle außerdem weitgehend auf die Kontrolle eines zwischen zwei Verbindungsstellen einzuhaltenden Mindestabstands oder einer längenbezogenen Maximalanzahl von Verbindungsstellen verzichtet werden und vor der Anbringung am Fahrzeug erübrigt sich das Detektieren und das Heraustrennen einer Verbindungsstelle. Allerdings ist hierfür erforderlich, dass die Verbindungsstelle von hoher Qualität ist und insbesondere derart erzeugt ist, dass sie optisch gar nicht oder nur vernachlässigbar auffällig ist und sie die Funktion des Profilsstrangs am Fahrzeug nicht zu beeinträchtigen droht.

Eine weitere Herausforderung bei der Erzeugung und weiteren Verarbeitung von nach wie vor mit Verbindungsstellen versehenem Profilstrang ist die Tatsache, dass infolge des Heraustrennens einer Fehlstelle auch ein Klebestreifen durchtrennt wird, der während der Herstellung des Profilstrangs auf diesem angebracht wird. Hierdurch stellt sich der Profilsstrang im Bereich der Verbindungsstelle jedoch strukturell geschwächt dar.

Vor diesem Hintergrund ist es eine Aufgabe der Erfindung, ein Verfahren zur Herstellung eines Profilstrangs bzw. eine Fertigungseinrichtung zur Herstellung eines Profilstrangs bereit zu stellen, das bzw. die eine optisch und/oder strukturell hohe Qualität von Verbindungsstellen bereitzustellen vermag.

Die Erfindung geht von Verfahren zur Herstellung eines einem Lieferspeicher zugeführten Endlos-Profilstrangs aus Weichkunststoff- und/oder Gummimaterial zur Verwendung als Dichtungsprofil, Kantenschutzprofil oder dergleichen an einem Kraftfahrzeug, wobei der Endlos-Profilstrang in einem kontinuierlichen Prozess aus einem Ausgangsmaterial erzeugt wird und vor der Lieferung an einen Abnehmer einem an den Abnehmer zu liefernden Lieferspeicher zugeführt wird. Zur Lösung der vorstehend genannten Aufgabe ist dann vorgesehen, dass
- der Endlos-Profilstrang während eines ersten Verfahrensabschnitts einem Zwischenspeicher zugeführt wird,
- der Endlos-Profilstrang dem Zwischenspeicher während eines dem ersten Verfahrensabschnitts nachgelagerten zweiten Verfahrensabschnitts wieder entnommen wird, wobei
   während des zweiten Verfahrensabschnitts
- etwaige Fehlstellen aus dem Profilstrang herausgetrennt und die stirnseitigen Trennenden unter Erzeugung von Verbindungsstellen wieder gefügt werden und/oder
- über eine Verbindungsstelle hinweg ein Klebestreifen auf den Profilstrang aufgebracht wird,
und schließlich der Profilstrang dem Lieferspeicher zugeführt wird.

Eine für eine derartiges Verfahren einzusetzende Fertigungsanlage zur Herstellung eines fehlstellenfreien Profilsstrangs nach dem vorstehend definierten Verfahren sieht dem entsprechend eine bestimmungsgemäß zur Durchführung des ersten Verfahrensabschnitts eingerichtete erste Fertigungslinie sowie eine bestimmungsgemäß zur Durchführung des zweiten Verfahrensabschnitts eingerichtete zweite Fertigungslinie vor, wobei
- die erste Fertigungslinie eine Zwischenspeicher-Zuführeinrichtung aufweist, mit der der auf der ersten Fertigungslinie hergestellte Endlos-Profilstrang als Zwischenprodukt dem Zwischenspeicher zugeführt wird,
- die zweite Fertigungslinie eine Zwischenspeicher-Entnahmeeinrichtung aufweist, mittels der der auf der ersten Fertigungslinie hergestellte Endlos-Profilstrang dem auf der ersten Fertigungslinie befüllten Zwischenspeicher entnommen werden kann, und eine Lieferspeicher-Zuführeinrichtung aufweist, mit der der auf der zweiten Fertigungslinie fertiggestellte Endlos-Profilstrang als an den Kunden zu lieferndes Endprodukt einem Lieferspeicher zugeführt wird,
und wobei die erste Fertigungslinie und die zweite Fertigungslinie unabhängig voneinander betreibbar sind.

Das vorstehend beschriebene Verfahren und die vorstehend beschriebene Fertigungsanlage ermöglichen durch die zunächst vorgenommene Zwischenspeicher-Zuführung des Endlos-Profilstrangs als Abschluss eines ersten Verfahrensabschnitts und die die in einem nachgelagerten zweiten Verfahrensabschnitt erfolgende Wiederentnahme aus dem Zwischenspeicher, wobei beide Verfahrensabschnitte bevorzugt beim Profilsstranghersteller durchgeführt werden, die Realisierung einer Reihe von Vorteilen.

So wird durch die Aufteilung des Verfahrens insbesondere ermöglicht, verschiedene Maßnahmen bei der Erzeugung des Profilstrangs, etwa das Detektieren, Markieren und Heraustrennen von Fehlstellen, das Herstellen einer Verbindungsstelle oder das Aufbringen eines Klebestreifens gezielt auf verschiedene Verfahrensabschnitte zu verteilen und die zur Durchführung des Herstellungsverfahrens zu verwendende Fertigungseinrichtung für die jeweiligen in einem Verfahrensabschnitt durchzuführenden Fertigungsschritte besser zu optimieren und den zum Beispiel zweiten Verfahrensabschnitt unabhängig von bestimmten in ersten Verfahrensabschnitt einzuhaltenden Bedingungen oder Vorgaben betreiben zu können (und umgekehrt). Dies betrifft beispielsweise die Einhaltung der optimalen und unterbrechungsfrei konstant zu haltenden Extrusionsgeschwindigkeit im ersten Verfahrensabschnitt, die dann im zweiten Verfahrensabschnitt unberücksichtigt bleiben kann.

Ferner kann durch die Trennung des Fertigungsverfahrens in zwei eigenständige und voneinander unabhängige Verfahrensabschnitte auf zwei unabhängig voneinander betreibbaren Fertigungslinien besser auf die in einem bestimmten Fertigungsschritt vorliegenden Eigenschaften des noch in der Fertigung befindlichen Materialabschnitts Einfluss genommen werden. Dies betrifft insbesondere auch die bei der Durchführung bestimmter Verfahrensschritte vorliegende Momentantemperatur des hergestellten Profilstrangs, die im ersten Verfahrensabschnitt bedingt durch die im ersten Verfahrensabschnitt stattfindende Extrusion und Vulkanisation verfahrensbedingt und unvermeidlich hoch ist. Aufgrund der Trennung der Verfahrensabschnitte kann der Endlos-Profilstrang dem zweiten Verfahrensabschnitt erst dann zugeführt werden, wenn sich der Profilstrang hinreichend abgekühlt hat. Es hat sich nämlich gezeigt, dass auch die Temperatur des zu bearbeitenden Profilstrangs einen maßgeblichen Einfluss auf die Verbindungsstellenqualität haben kann.

Folglich ist bevorzugt vorgesehen, dass der erste Verfahrensabschnitt auf einer ersten Fertigungseinrichtung und der zweite Verfahrensabschnitt auf einer von der ersten Fertigungseinrichtung unabhängigen zweiten Fertigungseinrichtung durchgeführt wird. "Unabhängig" bedeutet in diesem Zusammenhang, dass die erste Fertigungseinrichtung funktional und/oder zeitlich und/oder physisch bzw. örtlich und/oder steuerungstechnisch nicht mit der zweiten Fertigungseinrichtung interagiert.

Es kann insbesondere vorgesehen sein, den noch fehlstellenbehafteten Profilstrang ohne vorheriges Heraustrennen der Fehlstellen und/oder ohne vorheriges Aufbringen eines Klebestreifens auf dem Zwischenspeicher zuzuführen, insbesondere auf eine Zwischenspule aufzuwickeln. Das Detektieren und Markieren der Fehlstellen kann gleichwohl bevorzugt in dem ersten Verfahrensabschnitt durchgeführt werden. Bevorzugt wird demnach der typischerweise aus Gummi- und/oder Kunststoffgranulaten extrudierte Endlos-Profilstrang noch während des ersten Verfahrensabschnitts mit einer Prüfeinrichtung geprüft und etwaige Fehlstellen durch Fehlstellenmarkierungen insbesondere gezielt für eine im zweiten Verfahrensabschnitt verwendete Detektionseinrichtung am Profilstrang identifizierbar gemacht.

Ferner hat sich als vorteilhaft herausgestellt, wenn im zweiten Verfahrensabschnitt bei laufender Entnahme des noch fehlstellenbehafteten Profilstrangs aus der Zwischenspeichereinrichtung, insbesondere bei laufender Abwicklung des Profilstrangs von der Zwischenspule, etwaige Fehlstellen zu identifizieren und aus dem Profilstrang herauszutrennen sowie die beim Heraustrennen entstehenden Trennenden mittels einer Fügeeinrichtung zufügen.

Ein Vorteil dieser Verfahrensauftrennung ist, dass die zwischen der Durchführung des ersten Verfahrensabschnitts und der Durchführung des zweiten Verfahrensabschnitts ein zeitlicher Versatz von zum Beispiel mindestens 24 Stunden oder gar mehr als eine Woche liegen kann. Dass der zweite Verfahrensabschnitt dem ersten Verfahrensabschnitt zeitlich im Grunde beliebig nachgelagert beginnen kann, ermöglicht es beispielsweise, den noch fehlstellenbehafteten und mit Fehlstellenmarkierungen dem Zwischenspeicher zugeführten Profilstrang abkühlen zu lassen, bevor dann bevorzugt im zweiten Verfahrensabschnitt Fehlstellen herausgetrennt, Verbindungstellen erzeugt und ein Klebestreifen aufgebracht werden. Es hat sich gezeigt, dass ein vorheriges Abkühlen-Lassen des Profilstrangs eine verbesserte Qualität des Profilstrangs, insbesondere eine Verbesserung der Verbindungsstellen und des an den Verbindungsstellen fast unvermeidlich entstehenden Stoßstellen-Übergangsversatzes, sowie eine verbesserte Lieferspeicherzuführung sowie eine verbesserte Klebestreifenaufbringung ermöglicht. Außerdem führt dies, da der Endlos-Profilstrang mit deutlich reduzierter Temperatur dem an den Fahrzeughersteller zu liefernden Lieferspeicher zugeführt wird, zu einer spannungsfreieren Speicherung des Endlos-Profilstrangs auf dem Lieferspeicher, insbesondere wenn der Lieferspeicher als Spule ausgebildet ist, auf die der Endlos-Profilstrang aufgewickelt wird. Bevorzugt wird dem dem Zwischenspeicher zugeführten Profilstrang eine wenigstens 50%-ige Abkühlung bezogen auf dessen Temperatur in Grad Celsius unmittelbar nach Beendigung der Zwischenspeicherzuführung gestattet, bevor der Profilstrang dem zweiten Verfahrensabschnitt durch Wiederentnahme aus dem Zwischenspeicher zugeführt wird.

Ferner ermöglicht die Verfahrensauftrennung in einen ersten Verfahrensabschnitt und einen zweiten Verfahrensabschnitt beispielsweise im zweiten Verfahrensabschnitt eine Profilstranggeschwindigkeit und eine Verfahrenssteuerung, welche die im ersten Verfahrensabschnitt stets konstant zu haltende Extrusions- und Vulkanisationsgeschwindigkeit des in der Erzeugung befindlichen Profilstrangs steuerungstechnisch unberücksichtigt lassen kann. Die im zweiten Verfahrensabschnitt eingestellte Geschwindigkeit des Profilstrangs kann ausschließlich auf die im zweiten Verfahrensabschnitt eingesetzten Einrichtungen, etwa eine Trenneinrichtung zum Heraustrennen von Fehlstellen, eine Fügeeinrichtung zum Fügen von beim Heraustrennen der Fehlstellen entstandenen Stoßstellen unter Erzeugung einer Verbindungsstelle, oder eine Einrichtung zur Aufbringung des Klebestreifens, abgestimmt sein. Im ersten Verfahrensabschnitt gilt dabei Ähnliches, da im ersten Verfahrensabschnitt Ausgleichseinrichtungen zur Ermöglichung der Konstanthaltung der Extrusionsgeschwindigkeit bei gleichzeitiger Ermöglichung von Fehlstellendetektierung, Fehlstellenheraustrennung, Verbindungsstellenerzeugung und Klebestreifenaufbringung weitestgehend entbehrlich werden. Insgesamt geht mit der Verfahrensauftrennung also eine erhebliche Vereinfachung der die Geschwindigkeit des Profilsstrangs berücksichtigenden Steuerung sowohl des ersten Verfahrensabschnitts als auch des zweiten Verfahrensabschnittes einher. Komplexere Ausgleichseinrichtungen und Ausgleichssteuerungen werden weitgehend entbehrlich oder zumindest erheblich vereinfacht und damit prozesssicherer.

Die Verfahrensauftrennung in zwei voneinander unabhängige Verfahrensabschnitte ermöglicht ferner ein vereinfachtes Heraustrennen von Fehlstellen und ein vereinfachtes Wieder-Zusammenfügen der beim Heraustrennen entstandenen Stoßenden zu einer Verbindungsstelle bei gleichzeitiger Gewährleistung eines Mindestabstands L_{MIN} zwischen zwei Verbindungsstellen oder einer längenbezogenen Maximalanzahl Z_{MAX} von Verbindungsstellen. Zu diesem Zweck kann die zweite Fertigungslinie eine Überwachung einer Minimalabstandvorgabe L_{MIN} von Fehlstellen und/oder von Verbindungsstellen und/oder eine Überwachung einer längenbezogenen Maximalanzahlsvorgabe Z_{MAX} von Fehlstellen und/oder von Verbindungsstellen aufweisen.

Bevorzugt ist vorgesehen, dass im zweiten Verfahrensabschnitt zumindest ein Teilabschnitt des einer Trenneinrichtung zum Herausschneiden von Fehlstellen nachgelagerten Profilstrangabschnitts und/oder zumindest ein Teilabschnitt des einer Fügeeinrichtung zum Fügen der beim Heraustrennen entstandenen Trennenden nachgelagerten Profilstrangabschnitts zumindest temporär angehalten wird (lokale Vorschubgeschwindigkeit ist Null) und der der Trenneinrichtung und/oder der Fügeeinrichtung vorgelagerte Profilstrangabschnitt zur Trenneinrichtung und/oder zur Fügeeinrichtung in Vorschubrichtung nachgeführt wird.

Diese vorteilhafte Möglichkeit der Führung des Verfahrens ermöglicht, dass auch ein längerer der Trenneinrichtung und/oder der Fügeeinrichtung vorgelagerter Profilstrangabschnitt insbesondere bei gleichzeitigem Vorschub kontinuierlich aus der Fertigungslinie abgeleitet und einer Entsorgung zugeführt werden kann. Ein zu entsorgender längerer Profilstrangabschnitt kann zum Beispiel entstehen, wenn ein Profilsabschnitt neben einer ersten Fehlstelle auch eine dieser nachfolgende zweite Fehlstelle aufweist, deren Abstand zur ersten Fehlstelle kleiner als L_{MIN} ist oder deren gesondertes Heraustrennen zur einer Überschreitung einer längenbezogenen Maximalanzahl Z_{MAX} von Verbindungsstellen führen würde. Durch die beschriebene Verfahrensführung kann der betroffene Profilstrangabschnitt in einem kontinuierlichen Prozess vor dem Erzeugen einer Verbindungsstelle abgeleitet und der Entsorgungseinrichtung zugeführt werden kann. Eine Rückführung des der Trenneinrichtung nachgelagerten Profilsstrangabschnitts zur Fügeeinrichtung, insbesondere also eine Richtungsumkehr der Profilstrangförderrichtung (Vorschubrichtung) des der Trenneinrichtung nachgelagerten Profilstrangabschnitts, ist nicht erforderlich. Die vorstehend beschriebene Verfahrensführung, insbesondere das Nachführen eines Trennendes in Vorschubrichtung, und eine diesen Verfahrensführung ermöglichende Fertigungslinie wird losgelöst von den weiteren Merkmalen des in dieser Anmeldung beschriebenen Verfahrens und der beschriebenen Fertigungslinien, insbesondere losgelöst von der vorstehend als vorteilhaft beschriebenen Verfahrenstrennung auf zwei Fertigungslinien und losgelöst davon, ob die Maßnahmen auf einer ersten Fertigungslinie oder auf einer zweiten Fertigungslinie oder insgesamt auf einer einzigen Fertigungslinie durchgeführt werden, als eigenständige Erfindung angesehen.

Bei der Fertigungsanlage ist vorteilhafter Weise ferner vorgesehen, dass die erste Fertigungslinie eine Prüfeinrichtung zum Erkennen von Fehlstellen und eine Vorrichtung zur Markierung der Fehlstellen aufweist und die zweite Fertigungslinie eine Detektiereinrichtung für die Identifizierung der im ersten Verfahrensabschnitt vorgenommenen Fehlstellenmarkierungen aufweist. Hierdurch wird das Detektieren von Fehlstellen im zweiten Verfahrensabschnitt bzw. auf der zweiten Fertigungslinie erheblich vereinfacht und es können deutlich einfache Erkennungssystem verwendet werden.

Die zweite Fertigungslinie weist dabei bevorzugt eine Klebestreifenstation zur Aufbringung eines Klebestreifens auf den Profilstrang auf, wobei die Klebestreifenstation einer Fügeeinrichtung zur Erzeugung einer Verbindungsstelle in Vorschubrichtung nachgelagert ist. Somit ist die Aufbringung eines sich unterbrechungslos über eine Verbindungsstelle erstreckenden Klebestreifens ermöglicht.

In den nachfolgenden Zeichnungen wird die Erfindung anhand einer beispielhaft dargestellten Verfahrensführung

In den Zeichnungen zeigt
- Fig. 1: einen Profilstrang in einer perspektivischen Ansicht mit Blick auf ein stirnseitiges Trennende eines Profilstrangs, und
- Fig. 2: einen eine Verbindungsstelle aufweisenden und mit einem Klebestreifen versehenen Profilstrang,
- Fig. 3: eine erste Fertigungslinie durch Durchführung eines ersten Verfahrensabschnitts, und
- Fig. 4A-4E: verschiedene Zustände einer zweiten Fertigungslinie zur Durchführung eines zweiten Verfahrensabschnitts.

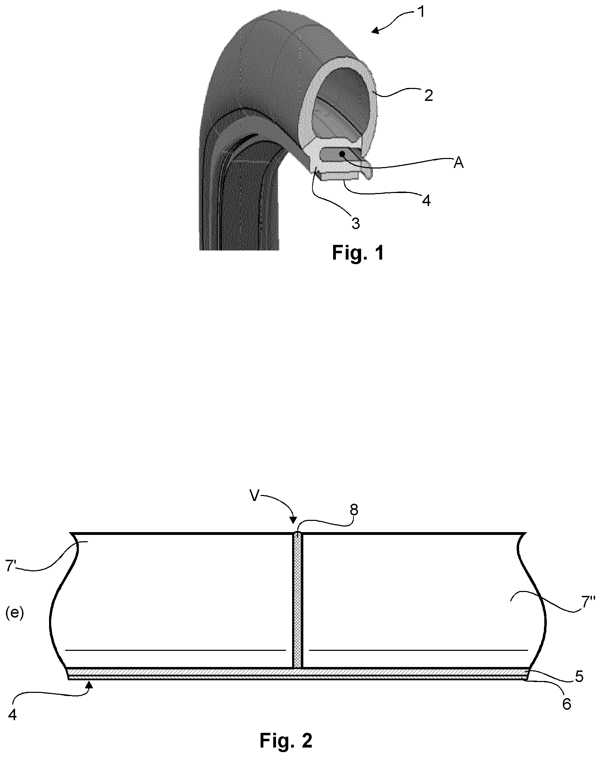

Figur 1 zeigt beispielhaft einen Profilstrang 1, wie er typischerweise als Türdichtung bei einem Kraftfahrzeug eingesetzt wird. Der Profilstrang 1 ist mehrkomponentig und weist einen ersten Materialbereich 2 aus einem (Weich- )Gummi bzw. Kautschukmaterial (z.B. EPDM) und einen zweiten Materialbereich 3 aus einem Weich-(Gummi) bzw. Kautschukmaterial (z.B. EPDM) auf. Der erste Materialbereich 2 ist aufgrund des bevorzugt als Moosgummi ausgeführten Materials und der schlauchartigen Ausgestaltung des von ihm gebildeten Hohlkammer-Profilstrangquerschnitts außenseitig hoch flexibel und vermag sich dichtend an den Karosseriebereich, mit dem er bei geschlossener Tür in Anlage kommt, anzuschmiegen. Der gegenüber dem ersten Materialbereich 2 etwas steifere zweite Materialbereich 3 formt einen U-förmigen Aufnahmekanal A. Der Profilstrang 1 wird über den zweiten Materialbereich 3 am Kraftfahrzeug befestigt, insbesondere mittels eines Klebebands aufgeklebt.

Der in der Figur 1 untere, freie Schenkel des U-förmigen Aufnahmekanals A weist an dessen Unterseite einen Klebestreifen 4 auf. Der Klebestreifen 4 ist, wie der Darstellung in Figur 2 entnommen werden kann, mehrschichtig mit einer Klebstoffschicht 5 und einem Liner 6 aufgebaut, der vor dem Aufbringen des Profilstrangs auf die Karosserie entfernt wird. Wie aus Figur 2 ersichtlich erstreckt sich der Klebestreifen 4 unterbrechungslos (ohne selbst unterbrochen zu sein) über eine Verbindungsstelle V, die vor dem Aufbringen des Klebestreifens 4 durch das Heraustrennen einer Fehlstelle und das Wieder-Zusammenfügen der dabei entstandenen Trennenden erzeugt wurde. Zum Fügen der Trennenden wurde in die Verbindungstelle eine Fügemasse 8 eingebracht, mittels der die Trennenden stoffschlüssig gefügt wurden.

Der in Figur 1 und Figur 2 beispielhaft dargestellte Profilstrangabschnitt kann Teil eines Endlos-Profilstrangs sein, wie er mit dem nachfolgend erläuterten Verfahren hergestellt werden kann.

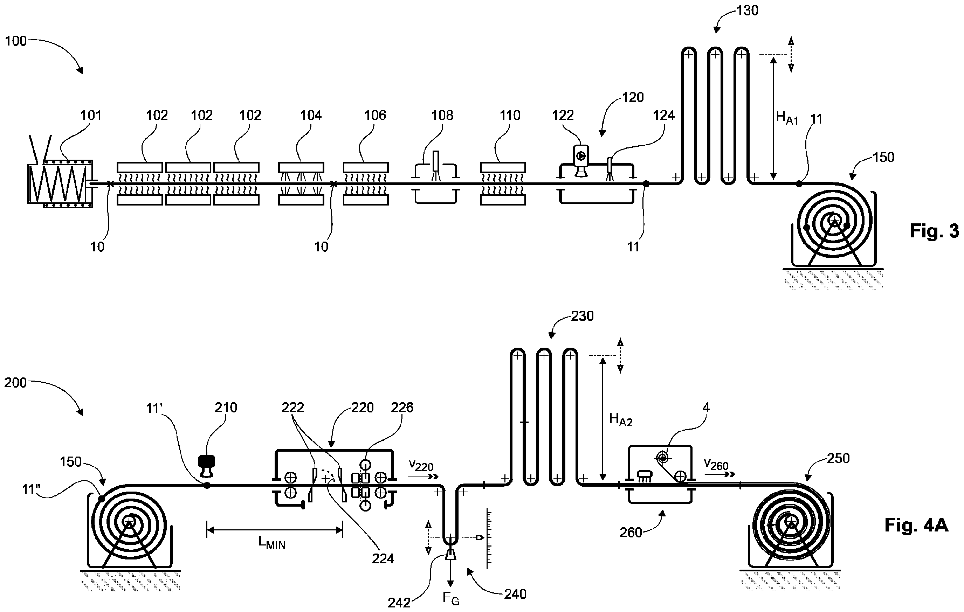

Figur 3 zeigt eine erste Fertigungslinie 100, auf der ausgehend von einem Ausgangsmaterial, typischerweise ein als Granulat oder in Streifenform vorliegendes (Weich-)Gummi (z.B. eine EPDM Gummimischung und/oder eine sonstige Moosgummimischung), ein Endlos-Profilstrang 110 in einem kontinuierlichen Prozess erzeugt wird. Das Ausgangsmaterial wird einem Extruder 101 zugeführt, extrudiert, zum Durchvulkanisieren mehrstufig erwärmt (Mikrowellen 102), abgekühlt (Sprühkühlung 104), getrocknet (Trocknung 106), mit Trennlack lackiert (Trennlack-Lackiereinrichtung 108) und wieder getrocknet (Lacktrocknung 110). Ergebnis dieses Fertigungsabschnitt ist ein durchvulkanisierter, mit Trennlack lackierter Endlos-Profilstrang mit einer verfahrensbedingt hohen Temperatur. Die genaue Reihenfolge der vorstehend beschriebenen Maßnahmen und die Anzahl und Anordnung der hierfür erforderlichen Vorrichtungen ist in Figur 3 rein beispielhaft und lediglich zu Erläuterungszwecken dargestellt und nicht eigentlicher Gegenstand der Erfindung.

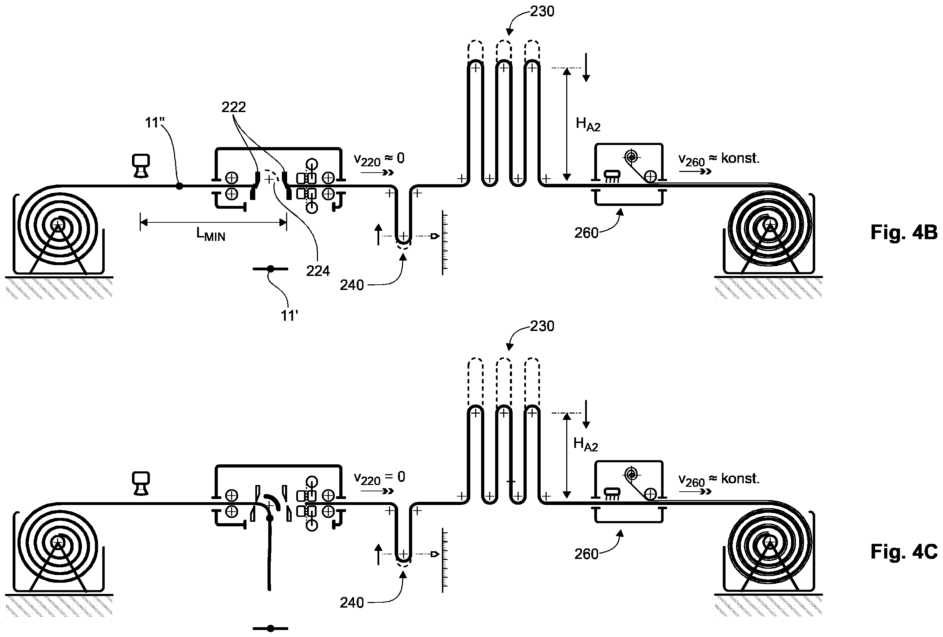

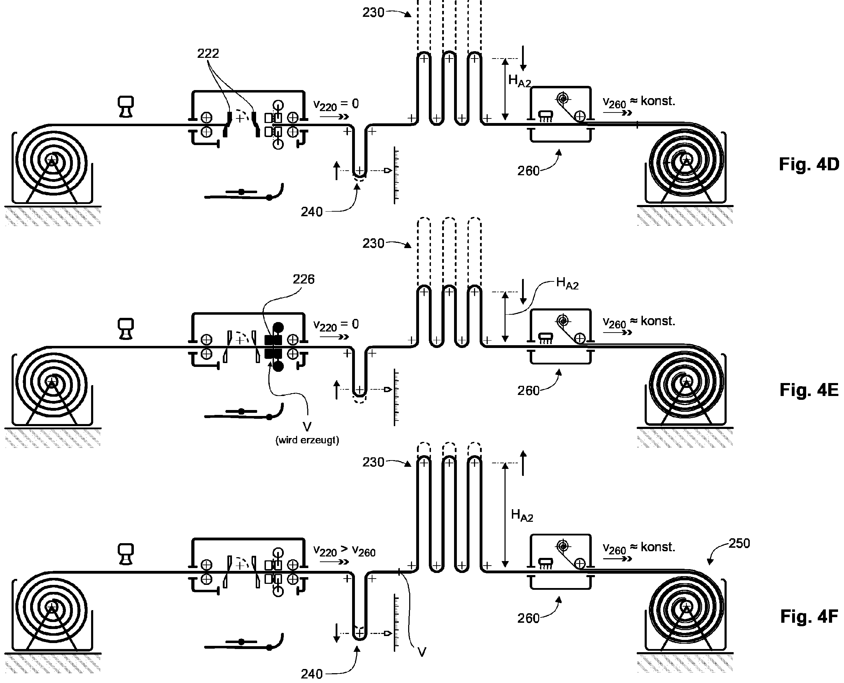

Die in Figur 3 dargestellte erste Fertigungslinie 100 weist im Anschluss an die vorstehend beschriebenen Maßnahmen eine Prüfeinrichtung 120 zur Prüfung des Profilstrangs auf etwaige Fehlstellen auf. Die Prüfeinrichtung 120 umfasst bevorzugt ein optisches, softwaregestütztes Prüfsystem mit einer Kamera 122, das noch unmarkierte Fehlstellen 10, die in Figur 3 mit einem "x" gekennzeichnet sind, eigenständig anhand einer softwaregestützten optischen Überwachung des in Vorschubrichtung S an der Kamera 122 vorbeiziehenden Endlos-Profilstrangs zu erkennen vermag. Wird eine Fehlstelle 10 als eine herauszutrennende Fehlstelle erkannt, wird diese durch eine Markiereinrichtung 124 markiert. Bevorzugt wird auf die Profilstrangoberfläche im Bereich einer Fehlstelle oder nahe vor oder nahe hinter einer Fehlstelle eine Farbmarkierung aufgebracht, die sich optisch deutlich von der typischerweise schwarzen Oberfläche des Profilstrangs abhebt. Die so markierte Fehlstelle wird zu einer markierten Fehlstelle 11, die in Figur 3 und Figur 4 mit einem "•" gekennzeichnet ist.

Die erste Fertigungslinie 100 kann außerdem einen ersten Strang-Akkumulator 130 aufweisen, der durch die Variation der wirksamen Akkumulatorhöhe H_{A1} Geschwindigkeitsunterschiede vor und nach dem ersten Strangakkumulator 130 auszugleichen vermag. Die Strang-Speicherkapazität des Akkumulators wird dabei neben der wirksamen Akkumulatorhöhe auch von der Anzahl der oberen und unteren Umlenkrollen mitbestimmt, die in der Praxis anders als in der schematischen Darstellung von Figur 3 typischerweise jeweils auf einer gemeinsamen Achse angeordnet sind. Allerdings ist bei dem erfindungsgemäßen Verfahren aufgrund der Trennung des Verfahrens in die in Figur 3 und Figur 4 dargestellten zwei unabhängigen und auf unterschiedlichen Fertigungslinien durchgeführten Verfahrensabschnitte ein Strang-Akkumulator im ersten Verfahrensabschnitt nicht immer notwendig, da die Maßnahmen, die eine Strang-Akkumulation in einem Strang-Akkumulator maßgeblich erforderlich machen, bevorzugt im zweiten Verfahrensabschnitt durchgeführt werden.

Am Ende des ersten Verfahrensabschnitts wird der in diesem Verfahrensabschnitt hergestellte Endlos-Profilstrang bevorzugt mit markierten und noch herauszutrennenden Fehlstellen und noch ohne aufgebrachten Klebestreifen einem Zwischenspeicher 150 zugeführt. Der Profilstrang weist an dieser Stelle eine verfahrensbedingt hohe Temperatur auf. Der Zwischenspeicher wird der ersten Fertigungslinie entnommen und zu einem späteren Zeitpunkt der steuerungstechnisch von der ersten Fertigungslinie 100 unabhängigen zweiten Fertigungslinie 200 zur Durchführung des zweiten Verfahrensabschnitts zugeführt.

Figur 4 zeigt in Fig.4A bis Fig.4F insgesamt sechs Einzeldarstellungen verschiedener Maßnahmen und Verfahrensstadien des auf der zweiten Fertigungslinie 200 durchgeführten zweiten Verfahrensabschnitts, der aufgrund der Trennung der ersten Fertigungslinie 100 und der zweiten Fertigungslinie 200 nicht nur hinsichtlich der automatisierten Verfahrenssteuerung sondern auch örtlich und zeitlich losgelöst von dem ersten Verfahrensabschnitt beim Profilstranghersteller durchgeführt werden kann.

Am Beginn des zweiten Verfahrensabschnitts wird zunächst ein im ersten Verfahrensabschnitt auf der ersten Fertigungslinie 100 befüllter Zwischenspeicher 150 der zweiten Fertigungslinie 200 bzw. dem zweiten Verfahrensabschnitt zugeführt. Der hierauf befindliche Profilstrang wird nachfolgend dem Zwischenspeicher 150 entnommen und in Vorschubrichtung S an einer Detektiereinrichtung 210 vorbeigeführt, die die im ersten Verfahrensabschnitt erkannte und markierte Fehlstelle 11 anhand der im ersten Verfahrensabschnitt aufgebrachten Markierung zu identifizieren vermag. Die Nutzung einer im ersten Verfahrensabschnitt aufgebrachten Markierung im zweiten Verfahrensabschnitt hat mehrere Vorteile. Insbesondere kann eine wesentlich vereinfachte Detektiereinrichtung 202 eingesetzt werden, die zum Beispiel lediglich eine großflächige und sich farblich von der Profilstrangoberfläche deutlich abhebende Farbmarkierung erkennen muss. Ferner sind derartige Markierungen auch mit dem bloßen Auge durch eine Anlagenbedienperson erkennbar, der durch Verfolgen der Farbmarkierung mit dem bloßen Auge sich der ordnungsgemäßen Funktion der Anlage vergewissern kann und damit zur Prozesssicherheit und Produktqualität maßgeblich beitragen kann.

In einem definierten Abstand L_{MIN} von der Detektiereinrichtung 220 ist eine Fehlstellenstation 220 vorgesehen, die der Profilstrang mit einer an die in der Fehlstellenstation durchgeführten Maßnahmen angepassten Vorschubgeschwindigkeit v₂₂₀, die temporär auch Null sein kann, durchläuft. Dieser Fehlstellenstation folgt eine Regeleinrichtung, bevorzugt in Form einer Regelschwinge 240, über die erkannt werden kann, ob und in welchem Maß sich die Vorschubgeschwindigkeiten entlang der Fertigungslinie unterscheiden und in welchem Umfang der auf den Lieferspeicher 250 aufzuwickelnde Profilstrang, dessen Vorschubgeschwindigkeit v₂₆₀ beim Durchlaufen durch eine Klebestreifenstation 260 zur Gewährleistung einer über die Profilstranglänge durchgängig guten Klebestreifenaufbringung möglichst konstant gehalten werden sollte, aus dem Strang-Akkumulator 230 nachgeführt werden muss. Der die Regelschwinge durchlaufende Strangabschnitt ist zu diesem Zweck über ein Gewicht 242 mit der Gewichtskraft F_{G} belastet, und die Regelschwinge registriert ein auf etwaige lokale Geschwindigkeitsunterschiede zurückzuführendes Heben und oder Senken einer Umlenkung bzw. Drängen nach oben oder unten aus einer Solllage heraus, was dann durch eine Verringerung oder Erhöhung der momentanen Höhe H_{A2} des Strang-Akkumulators 230 resultiert, da die Regelung bestrebt ist, die Regelschwinge in der Solllage zu halten.

Am Ende des zweiten Verfahrensabschnitts wird schließlich der fertiggestellte Endlos-Profilstrang dem an den Abnehmer zu liefernden Lieferspeicher 250 zugeführt. Erst dieser Profilstrang ist verfahrensbedingt von Fehlstellen befreit und weist lediglich noch Verbindungsstellen hoher Qualität auf. Ferner weist der dem Lieferspeicher zugeführte Profilstrang einen sich unterbrechungslos über eine Verbindungsstelle erstreckenden Klebestreifen auf und verleiht daher auch der Verbindungsstelle eine hohe strukturelle Integrität. Nachfolgend werden einige der vorstehend angedeuteten Verfahrensschritte anhand einzelner Darstellungen der Figuren 4A-4F gesondert erläutert.

In Figur 4A ist erkennbar, dass die Fehlstellen-Detektiereinrichtung 210 eine markierte Fehlstelle 11' erkennt. Diese Fehlstelle 11' wird bis zur Trenneinrichtung 222 weitergeführt, die bevorzugt einen Abstand L_{MIN} von der Fehlstellen-Detektiereinrichtung aufweist. Die Fehlstelle 11' wird dann, wie aus Figur 4B ersichtlich, durch die Trenneinrichtung 222 aus dem Profilstrang herausgetrennt. Der die Fehlstelle 11' enthaltende kurze Strangabschnitt kann entsorgt werden. Da zum Heraustrennen der Fehlstelle 11' der sich im Bereich Trenneinrichtung 222 und der Fügevorrichtung 226 befindliche Profilstrangabschnitt temporär angehalten wird (temporäre lokale Vorschubgeschwindigkeit v₂₂₀ = 0), nachdem das durch das Heraustrennen entstandene Trennende, welches dem herausgeschnittene Profilstrangabschnitt vorauseilt, weiter in Richtung der Fügeeinrichtung 226 weitergeführt wurde (temporäre lokale Vorschubgeschwindigkeit v₂₂₀ kurzzeitig größer aber nahe 0), der die Klebestreifenstation 260 durchlaufende Profilstrangabschnitt aber bevorzugt bei konstanter lokaler Vorschubgeschwindigkeit gehalten wird (v₂₆₀ = konstant), unterscheiden sich die beiden genannten lokalen Vorschubgeschwindigkeiten v₂₂₀ und v₂₆₀. Die Regelschwinge 240 registriert das lokale Verlangsamen und Anhalten des Profilstrangs vor der Regelschwinge durch ein Drängen der Regelschwingen-Umlenkung nach oben. Zum Ausgleich des Geschwindigkeitsunterschieds wird die Höhe H_{A2} des Strang-Akkumulators 230 reduziert, so dass lokale Vorschubgeschwindigkeit v₂₆₀ in der Klebetreifenstation 260 konstant gehalten werden kann.

In Figur 4B ist dann erkennbar, dass eine weitere markierte Fehlstelle 11" die Fehlstellen-Detektiereinrichtung 210 bereits passiert hat, bevor die Fehlstelle 11' die Trenneinrichtung erreicht hat. Dies bedeutet, dass die zweite Fehlstelle 11" der vorauseilenden Fehlstelle 11' in einem Abstand folgt, der geringer als der nach Herstellervorgabe einzuhaltende Minimalabstand L_{MIN} zweier aufeinanderfolgender markierter Fehlstellen 11 ist. Dies führt zu einer Aktivierung einer Umlenkeinrichtung 224, über die der der ersten Fehlstelle 11' nachfolgende Profilstrangabschnitt solange umgelenkt bzw. aus der den Endlos-Profilstrang verarbeitenden Fertigungslinie 200 abgeführt wird, bis die zweite Fehlstelle 11" im Bereich der Trenneinrichtung angekommen und von der Trenneinrichtung 222 erfasst werden kann (Figur 4C). Zu diesem Zeitpunkt hat wurde weiterer Profilstrang aus dem Strang-Akkumulator 230 entnommen, um der Klebestreifenstation 260 und dem nachgelagerten Lieferspeicher weiter mit konstanter Geschwindigkeit v₂₆₀ Profilstrang zuzuführen. Umlenkung der Regelschwinge drängt weiter nach oben. Die Höhe H_{A2} ist in Figur 4C gegenüber der in Figur 4B dargestellten Höhe daher weiter reduziert.

In Fig. 4D ist aus der Profilstrangabschnitt, der die Fehlstelle 11" enthält, durch Aktivierung der Trenneinrichtung 222 herausgeschnitten und kann entsorgt werden. Die Umlenkeinrichtung 224 ist deaktiviert, da die Detektiereinrichtung 210 keine weitere markierte Fehlstelle im Bereich des Mindestabstands L_{MIN} erkannt hat. Das der Klebestreifenstation 260 zugeführte Strangprofil wird nach wie vor dem Strang-Akkumulator 230 entnommen und dessen Höhe H_{A2} verringert sich weiter.

In Figur 4E ist zu erkennen, wie das dem herausgeschnittenen Strangabschnitt nachfolgende Trennende in Vorschubrichtung der nun aktivierten Fügeeinrichtung 226 zugeführt wird und die beiden Trennenden zu einer Verbindungsstelle V (Figur 2) in einer dem Fachmann bekannten Art und Weise gefügt werden, während das der Klebestreifenstation 260 zugeführte Strangprofil nach wie vor dem Strang-Akkumulator 230 entnommen wird.

Figur 4F zeigt schließlich, wie die Fertigungslinie nach dem Herausschneiden eines fehlstellenbehafteten Abschnitts des Strangprofils wieder in den in Figur 4A gezeigten Zustand zurückgeführt wird. Trenneinrichtung 222, Umlenkeinrichtung 224 und Fügeeinrichtung 226 sind deaktiviert. Die zuvor erzeugte Verbindungsstelle V hat zwischenzeitlich die Regelschwinge passiert, deren Umlenkung nun aufgrund der Einregelung der Vorschubgeschwindigkeit v₂₂₀ auf einen Wert größer v₂₆₀ mit einem Nachgeben nach unten reagiert, dem durch eine Vergrößerung der Höhe H_{A2} des Strangakkumulators 230 unter Konstanthaltung der Vorschubgeschwindigkeit v₂₆₀ entgegengewirkt wird, so dass der Strangakkumulator 230 wieder gefüllt werden kann.

Am Ende des zweiten Verfahrensabschnitts ist der Lieferspeicher 250 mit einem Endlos-Profilstrang befüllt, der - entsprechend der Vorgabe des Fahrzeugherstellers - fehlstellenbefreit ist und über qualitativ höchsten Ansprüchen genügende Verbindungsstellen aufweist, über die sich wie in Figur 2 gezeigt unterbrechungsfrei ein Klebestreifen erstreckt.

Der anhand der Figur 3 und den Figuren 4A-4E beschriebene Verfahrensablauf und die Aufteilung einzelner Verfahrensschritte auf den ersten oder zweiten Verfahrensabschnitt bzw. auf die erste oder zweite Fertigungslinie kann selbstverständlich im Einzelfall variieren.

Insbesondere kann vorgesehen sein, dass anstelle oder ergänzend zu der Vorgabe eines Minimalabstands L_{MIN} zwischen aufeinanderfolgenden Fehlstellen auch oder zusätzlich eine Maximalanzahl von Fehlstellen Z_{MAX} bezogen auf eine bestimmte Profilstranglänge herangezogen wird.

### Bezugszeichenliste

- 1: Profilstrang
- 2: erster Materialbereich
- 3: zweiter Materialbereich
- 4: Klebestreifen
- 5: Klebstoffschicht
- 6: Liner
- 7`/7": erstes/zweites Trennende
- 8: Fügemasse
- 9: metallische Folie / mit Metallpartikeln versetzten Masse
- 10: Fehlstelle
- 11: markierte Fehlstelle
- 100: erste Fertigungslinie
- 102: Mikrowelle
- 104: Sprühkühlung
- 106: Trocknung
- 108: Lackiereinrichtung
- 110: Lacktrocknung
- 120: Prüfeinrichtung
- 122: Kamera
- 124: Markierer
- 130: Akkumulator
- 150: Zwischenspeicher
- 200: zweite Fertigungslinie
- 210: Detektiereinrichtung
- 220: Fehlstellenstation
- 222: Trenneinrichtung
- 224: Umlenkeinrichtung
- 226: Fügeeinrichtung
- 230: zweiter Strang-Akkumulator
- 240: Regelschwinge
- 242: Regelschwingengewicht
- 250: Lieferspeicher
- 260: Klebestreifenstation

- V: Verbindungsstelle
- A: Aufnahmekanal
- S: Vorschubrichtung
- H_{A1}: variable Höhe des ersten Strang-Akkumulators
- H_{A2}: variable Höhe des zweiten Strang-Akkumulators
- L_{MIN} F_{G}: auf die Regelschwinge einwirkende Gewichtskraft
- V₂₂₀: lokale Vorschubgeschwindigkeit
- V₂₆₀: lokale Vorschubgeschwindigkeit

## Patentansprüche

1. Verfahren zur Herstellung eines einem Lieferspeicher (250) zugeführten Endlos-Profilstrangs (1) aus Weichkunststoff- und/oder Gummimaterial zur Verwendung als Dichtungsprofil, Kantenschutzprofil oder dergleichen an einem Kraftfahrzeug, wobei der Endlos-Profilstrang (1) in einem kontinuierlichen Prozess aus einem Ausgangsmaterial erzeugt wird und vor der Lieferung an einen Abnehmer dem an den Abnehmer zu liefernden Lieferspeicher (250) zugeführt wird,
**dadurch gekennzeichnet, dass**
- der Profilstrang (1) während eines ersten Verfahrensabschnitts einem Zwischenspeicher (150) zugeführt wird,
- der Profilstrang (1) dem Zwischenspeicher (150) während eines dem ersten Verfahrensabschnitt nachgelagerten zweiten Verfahrensabschnitts wieder entnommen wird, wobei
während des zweiten Verfahrensabschnitts
- etwaige Fehlstellen (10, 11, 11', 11") aus dem Profilstrang (1) herausgetrennt und die stirnseitigen Trennenden unter Erzeugung von Verbindungsstellen V wieder gefügt werden
und/oder
- über eine Verbindungsstelle V hinweg, an der eine Fehlstelle aus dem Profilstrang herausgetrennt und die stirnseitigen Trennenden unter Erzeugung der Verbindungsstelle V wieder gefügt sind, ein Klebestreifen (4) auf den Profilstrang (1) aufgebracht wird,
und anschließend der Profilstrang dem Lieferspeicher (250) zugeführt wird.

2. Verfahren nach Anspruch 1, **dadurch gekennzeichnet, dass** der auf der ersten Fertigungslinie (100) durchgeführte erste Verfahrensabschnitt und der auf der zweiten Fertigungslinie (200) durchgeführte zweite Verfahrensabschnitt dem ersten Verfahrensabschnitt zeitlich nachgelagert und vom ersten Verfahrensabschnitt unabhängig durchgeführt wird.

3. Verfahren nach einem der beiden vorhergehenden Ansprüche, **dadurch gekennzeichnet, dass** der noch fehlstellenbehaftete Profilstrang (1) ohne vorheriges Heraustrennen der Fehlstellen (10, 11) und/oder ohne Aufbringen eines Klebestreifens (4) dem Zwischenspeicher (150) zugeführt wird.

4. Verfahren nach einem der vorhergehenden Ansprüche, **dadurch gekennzeichnet, dass** während des ersten Verfahrensabschnitts etwaige Fehlstellen (10) durch Fehlstellenmarkierungen am Profilstrang (1) für eine zweiten Verfahrensabschnitt eingesetzte Detektiereinrichtung (210) identifizierbar gemacht werden und in dem zweiten Verfahrensabschnitt die im ersten Verfahrensabschnitt markierten Fehlstellen (11) im zweiten Verfahrensabschnitt anhand der im ersten Verfahrensabschnitt erfolgen Markierungen mittels der Detektiereinrichtung (210) identifiziert werden.

5. Verfahren nach einem der vorhergehenden Ansprüche, **dadurch gekennzeichnet, dass** im zweiten Verfahrensabschnitt etwaige Fehlstellen (11) mit einer Detektiereinrichtung (210) identifiziert, mittels einer Trenneinrichtung (222) aus dem Profilstrang herausgetrennt und die beim Heraustrennen entstehenden Trennenden mittels einer Fügevorrichtung (226) zu einer Verbindungsstelle V gefügt werden.

6. Verfahren nach einem der vorhergehenden Ansprüche, **dadurch gekennzeichnet, dass** zwischen der Durchführung des ersten Verfahrensabschnitts und der Durchführung des zweiten Verfahrensabschnitts mit demselben Zwischenspeicher (150) dem mindestens 24 Stunden liegen.

7. Verfahren nach einem der vorhergehenden Ansprüche, **dadurch gekennzeichnet, dass** die Temperatur des Profilstrangs bei Entnahme des Profilstrangs vom Zwischenspeicher (150) zu Beginn des zweiten Verfahrensabschnitts gegenüber der Temperatur des Profilstrangs, mit dem der Profilstrang dem Zwischenspeicher (150) zum Ende des ersten Verfahrensabschnitts zugeführt wird, bezogen auf den jeweiligen Temperaturwert in °C um mindestens 50 % niedriger ist.

8. Verfahren nach einem der vorhergehenden Ansprüche, **dadurch gekennzeichnet, dass** im zweiten Verfahrensabschnitt Fehlstellen (11, 11', 11") aus dem Profilstrang herausgeschnitten werden und das beim Herausschneiden entstandene in Vorschubrichtung nacheilende Trennende zum anschließenden Fügen mit dem in Vorschubrichtung vorauseilenden Trennende in Vorschubrichtung zu einer Fügevorrichtung (226) zwecks Erzeugung einer Verbindungsstelle V nachgeführt wird.

9. Verfahren nach einem der vorhergehenden Ansprüche, **dadurch gekennzeichnet, dass** im zweiten Verfahrensabschnitt eine Überwachung einer Minimalabstandvorgabe L_{MIN} und/oder eine Überwachung einer längenbezogenen Maximalanzahlsvorgabe Z_{MAX} vorgenommen wird, wobei ein einer solchen Vorgabe nicht entsprechender Profilstranglängenabschnitt in Vorschubrichtung aus der Fertigungslinie (200) abgeleitet wird.

10. Verfahren nach einem der beiden vorhergehenden Ansprüche, **dadurch gekennzeichnet, dass** im zweiten Verfahrensabschnitt eine Klebestreifenstation (260) zur Aufbringung eines Klebestreifens den Klebestreifen (4) unterbrechungslos über eine zuvor erzeugte Verbindungsstelle V aufbringt.

11. Fertigungsanlage zur Herstellung eines fehlstellenfreien Profilsstrangs nach einem Verfahren gemäß einem der vorhergehenden Ansprüche, umfassend
- eine bestimmungsgemäß zur Durchführung des ersten Verfahrensabschnitts eingerichtete erste Fertigungslinie (100), sowie
- eine bestimmungsgemäß zur Durchführung des zweiten Verfahrensabschnitts eingerichtete zweite Fertigungslinie (200),
**dadurch gekennzeichnet, dass**
- die erste Fertigungslinie (100) eine Zwischenspeicher-Zuführeinrichtung aufweist, mit der der auf der ersten Fertigungslinie (100) hergestellte Endlos-Profilstrang (1) als Zwischenprodukt dem Zwischenspeicher (150) zugeführt werden kann,
- die zweite Fertigungslinie (200) eine Zwischenspeicher-Entnahmeeinrichtung aufweist, mittels der der auf der ersten Fertigungslinie (100) hergestellte Endlos-Profilstrang (1) dem auf der ersten Fertigungslinie befüllten Zwischenspeicher (150) entnommen werden kann, und eine Lieferspeicher-Zuführeinrichtung aufweist, mit der der auf der zweiten Fertigungslinie (200) fertiggestellte Endlos-Profilstrang (1) als an den Kunden zu lieferndes Endprodukt einem Lieferspeicher (250) zugeführt wird,
wobei die erste Fertigungslinie (100) und die zweite Fertigungslinie (200) unabhängig voneinander betreibbar sind.

12. Fertigungsanlage nach dem vorhergehenden Anspruch, **dadurch gekennzeichnet, dass** die erste Fertigungslinie (100) eine Prüfeinrichtung (122) zum Erkennen von Fehlstellen und eine Vorrichtung zur Markierung der Fehlstellen (124) aufweist und die zweite Fertigungslinie (200) eine Detektiereinrichtung (210) für die Identifizierung der auf der ersten Fertigungslinie (100) vorgenommenen Fehlstellenmarkierungen aufweist.

13. Fertigungsanlage nach einem der beiden vorhergehenden Ansprüche, **dadurch gekennzeichnet, dass** die zweite Fertigungslinie (200) eine Klebestreifenstation (260) zur Aufbringung eines Klebestreifens auf den Profilstrang (1) aufweist, wobei die Klebestreifenaufbringung einer Fügevorrichtung (226) zur Erzeugung einer Verbindungsstelle V in Vorschubrichtung nachgelagert ist.

14. Fertigungsanlage nach einem der drei vorhergehenden Ansprüche, **dadurch gekennzeichnet, dass** die zweite Fertigungslinie (200) eine Überwachung einer Minimalabstandvorgabe L_{MIN} von Fehlstellen (10, 11) und/oder von Verbindungsstellen V und/oder eine Überwachung einer längenbezogenen Maximalanzahlsvorgabe Z_{MAX} von Fehlstellen (10, 11) und/oder von Verbindungsstellen V aufweist.

15. Fertigungsanlage nach einem der vier vorhergehenden Ansprüche, **dadurch gekennzeichnet, dass** die zweite Fertigungslinie (200) eine Einrichtung zur Absonderung eines einer Fertigungsvorgabe nicht entsprechenden Profilstranglängenabschnitts aus der Fertigungslinie (200) in Vorschubrichtung aufweist.

## Claims

1. Method for producing an endless profile strand (1) of soft plastic and/or rubber material fed to a supply storage (250) for use as a sealing profile, edge protection profile or the like on a motor vehicle, the endless profile strand (1) being produced from a starting material in a continuous process and being fed to the supply storage (250) to be delivered to the customer before delivery to a customer,
**characterized in that**
- the profile strand (1) is fed to an intermediate storage (150) during a first process section,
- the profile strand (1) is removed again from the intermediate storage (150) during a second process section downstream of the first process section, wherein
during the second process section
- any defects (10, 11, 11', 11") are cut out of the profiled section (1) and the end separating ends are rejoined, creating joints V
and/or
- an adhesive strip (4) is applied to the profile strand (1) over a joint V at which a defect is cut out of the profile strand and the end separating ends are rejoined to produce the joint V,
and then the profile strand is fed to the supply storage (250).

2. The method according to claim 1, **characterized in that** the first process section performed on the first manufacturing line (100) and the second process section performed on the second manufacturing line (200) are performed temporally downstream of the first process section and independently of the first process section.

3. Method according to one of the two preceding claims, **characterized in that** the profile strand (1) still containing defects is fed to the intermediate storage (150) without previously cutting out the defects (10, 11) and/or without applying an adhesive strip (4).

4. Method according to one of the preceding claims, **characterized in that** during the first process section, any defects (10) are made identifiable by defect markings on the profile strand (1) for a detection device (210) used in the second process section, and in the second process section, the defects (11) marked in the first process section are identified in the second process section by means of the detection device (210) on the basis of the markings made in the first process section.

5. Method according to one of the preceding claims, **characterized in that**, in the second process section, any defects (11) are identified by means of a detecting device (210), are separated out of the profile strand by means of a separating device (222), and the separating ends produced during separation are joined by means of a joining device (226) to form a joint V.

6. The method according to any one of the preceding claims, **characterized in that** there are at least 24 hours elapse between carrying out the first process section and carrying out the second process section with the same intermediate storage (150).

7. Method according to one of the preceding claims, **characterized in that** the temperature of the profile strand when the profile strand is removed from the intermediate storage (150) at the beginning of the second process section is at least 50% lower than the temperature of the profile strand with which the profile strand is fed to the intermediate storage (150) at the end of the first process section, based on the respective temperature value in °C.

8. Method according to one of the preceding claims, **characterized in that,** in the second process section, defects (11, 11', 11") are cut out of the profile strand and the separating end lagging behind in the feed direction which is produced during cutting out is fed in the feed direction to a joining device (226) for subsequent joining with the separating end leading ahead in the feed direction for the purpose of producing a joint V.

9. Method according to one of the preceding claims, **characterized in that in** the second process section a monitoring of a minimum distance specification L_{MIN} and/or a monitoring of a length-related maximum number specification Z_{MAX} is carried out, wherein a profile strand length section not corresponding to such a specification is derived from the manufacturing line (200) in the feed direction.

10. Method according to one of the two preceding claims, **characterized in that,** in the second process section, an adhesive strip station (260) for applying an adhesive strip applies the adhesive strip (4) without interruption over a previously created joint V.

11. Manufacturing line for producing a defect-free profile strand according to a method according to any one of the preceding claims, comprising
- a first manufacturing line (100) set up as intended for carrying out the first process section, and
- a second manufacturing line (200) set up as intended for carrying out the second process section,
**characterized in that**
- the first manufacturing line (100) has an intermediate storage feed device with which the endless profile strand (1) produced on the first manufacturing line (100) can be fed as an intermediate product to the intermediate storage (150),
- the second manufacturing line (200) has an intermediate storage removal device, by means of which the endless profile strand (1) produced on the first manufacturing line (100) can be removed from the intermediate storage (150) filled on the first manufacturing line, and has a supply storage feed device, by means of which the endless profile strand (1) finished on the second manufacturing line (200) is fed to a supply storage (250) as a final product to be delivered to the customer,
wherein the first manufacturing line (100) and the second manufacturing line (200) are operable independently of each other.

12. Manufacturing line according to the preceding claim, **characterized in that** the first manufacturing line (100) comprises an inspection device (122) for detecting defects and a marking device for marking the defects (124), and the second manufacturing line (200) comprises detection devices (210) for identifying the defect markings made on the first manufacturing line (100).

13. Manufacturing line according to one of the two preceding claims, **characterized in that** the second manufacturing line (200) has an adhesive strip station (260) for applying an adhesive strip to the profile strand (1), the adhesive strip application being downstream of a joining device (226) for producing a joint V in the feed direction.

14. Manufacturing line according to one of the three preceding claims, **characterized in that** the second manufacturing line (200) has a monitoring of a minimum distance specification L_{MIN} of defects (10, 11) and/or of joints V and/or a monitoring of a length-related maximum number specification Z_{MAX} of defects (10, 11) and/or of joints V.

15. Manufacturing line according to one of the four preceding claims, **characterized in that** the second manufacturing line (200) has a device for separating a profile strand length section not corresponding to a production specification from the manufacturing line (200) in the feed direction.

## Revendications

1. Procédé de fabrication d'un profilé sans fin (1) en matière plastique souple et/ou en caoutchouc, amené à un stockage de livraison (250), destiné à être utilisé comme profilé d'étanchéité, profilé de protection d'arête ou analogue sur un véhicule automobile, le profilé sans fin (1) étant produit dans un processus continu à partir d'un matériau de départ et étant amené, avant la livraison à un acheteur, au stockage de livraison (250) à livrer à l'acheteur,
**caractérisé en ce que**
- le profilé (1) est amené à un stockage intermédiaire (150) pendant une première étape du procédé,
- le profilé (1) est à nouveau prélevé du stockage intermédiaire (150) pendant une deuxième étape du procédé située en aval de la première étape du procédé, où
pendant la deuxième étape du procédé
- d'éventuels défauts (10, 11, 11', 11") sont séparés du profilé (1) et les extrémités de séparation frontales sont à nouveau assemblées en créant des joints V
et/ou
- une bande adhésive (4) est appliquée sur le profilé (1) en passant par un joint V, au niveau duquel un défaut est séparé dans le profilé et les extrémités de séparation frontales sont à nouveau assemblées en créant le joint V,
et le profilé est ensuite amené au stockage de livraison (250).

2. Procédé selon la revendication 1, **caractérisé en ce que** la première étape du procédé réalisée sur la première ligne de fabrication (100) et la deuxième étape du procédé réalisée sur la deuxième ligne de fabrication (200) sont réalisées en aval de la première étape du procédé et indépendamment de la première étape du procédé.

3. Procédé selon l'une des deux revendications précédentes, **caractérisé en ce que** le profilé (1) présentant encore des défauts est amené au stockage intermédiaire (150) sans séparation préalable des défauts (10, 11) et/ou sans application d'une bande adhésive (4).

4. Procédé selon l'une des revendications précédentes, **caractérisé en ce que**, pendant la première étape du procédé, d'éventuels défauts (10) sont rendus identifiables par des marquages de défauts sur le profilé (1) pour un dispositif de détection (210) utilisé dans la deuxième étape du procédé et, dans la deuxième étape du procédé, les défauts (11) marqués dans la première étape du procédé sont identifiés dans la deuxième étape du procédé à l'aide des marquages effectués dans la première étape du procédé au moyen du dispositif de détection (210).

5. Procédé selon l'une des revendications précédentes, **caractérisé en ce que**, dans la deuxième étape du procédé, les éventuels défauts (11) sont identifiés à l'aide d'un dispositif de détection (210), séparés du profilé à l'aide d'un dispositif de séparation (222) et les extrémités de séparation obtenues lors de la séparation sont assemblées à un joint V à l'aide d'un dispositif d'assemblage (226).

6. Procédé selon l'une quelconque des revendications précédentes, **caractérisé en ce qu'**il s'écoule au moins 24 heures entre I l'exécution de la première étape du procédé et l'exécution de la deuxième étape du procédé comprenant le même stockage intermédiaire (150).

7. Procédé selon l'une des revendications précédentes, **caractérisé en ce que** la température du profilé lors du prélèvement du profilé du stockage intermédiaire (150) au début de la deuxième étape du procédé est inférieure d'au moins 50 % à la température du profilé comprenant le profilé amené au stockage intermédiaire (150) à la fin de la première étape du procédé, par rapport à la valeur de température respective en °C.

8. Procédé selon l'une des revendications précédentes, **caractérisé en ce que**, dans la deuxième étape du procédé, des défauts (11, 11', 11") sont séparés par découpe du profilé et l'extrémité de séparation formée lors de la découpe, qui est en aval dans la direction d'avance, est amenée, en vue de l'assemblage ultérieur avec l'extrémité de séparation en amont dans la direction d'avance, dans la direction d'avance vers un dispositif d'assemblage (226) afin de créer un joint V.

9. Procédé selon l'une des revendications précédentes, **caractérisé en ce que**, dans la deuxième étape du procédé, on procède à une surveillance d'une consigne de distance minimale L_{MIN} et/ou à une surveillance d'une consigne de nombre maximal Z_{MAX} liée à la longueur, une section de longueur de profilé ne correspondant pas à une telle consigne étant déviée de la ligne de fabrication (200) dans la direction d'avance.

10. Procédé selon l'une des deux revendications précédentes, **caractérisé en ce que**, dans la deuxième étape du procédé, un poste (260) d'application d'une bande adhésive applique la bande adhésive (4) sans interruption sur un joint V préalablement créé.

11. Installation de fabrication d'un profilé sans défaut selon un procédé conforme à l'une des revendications précédentes, comprenant
- une première ligne de fabrication (100) configurée de manière appropriée pour l'exécution de la première étape du procédé, ainsi que
- une deuxième ligne de fabrication (200) configurée de manière appropriée pour l'exécution de la deuxième étape du procédé,
**caractérisé en ce que**
- la première ligne de fabrication (100) comprend un dispositif d'amenée de stockage intermédiaire, avec lequel le profilé sans fin (1) fabriqué sur la première ligne de fabrication (100) peut être amené comme produit intermédiaire au stockage intermédiaire (150),
- la deuxième ligne de fabrication (200) comprend un dispositif de prélèvement de stockage intermédiaire, au moyen duquel le profilé sans fin (1) fabriqué sur la première ligne de fabrication (100) peut être prélevé du stockage intermédiaire (150) rempli sur la première ligne de fabrication, et comprend un dispositif d'amenée de stockage de livraison, au moyen duquel le profilé sans fin (1) terminé sur la deuxième ligne de fabrication (200) est amené à un stockage de livraison (250) en tant que produit final à livrer au client,
la première ligne de fabrication (100) et la deuxième ligne de fabrication (200) pouvant être exploitées indépendamment l'une de l'autre.

12. Installation de fabrication selon la revendication précédente, **caractérisée en ce que** la première ligne de fabrication (100) comprend un dispositif de contrôle (122) pour la détection des défauts et un dispositif de marquage des défauts (124) et la deuxième ligne de fabrication (200) comprend un dispositif de détection (210) pour l'identification des marquages des défauts effectués sur la première ligne de fabrication (100).

13. Installation de fabrication selon l'une des deux revendications précédentes, **caractérisée en ce que** la deuxième ligne de fabrication (200) comprend un poste d'application de bande adhésive (260) sur le profilé (1), l'application de bande adhésive étant située en aval d'un dispositif d'assemblage (226) pour réaliser un joint V dans la direction d'avance.

14. Installation de fabrication selon l'une des trois revendications précédentes, **caractérisée en ce que** la deuxième ligne de fabrication (200) comprend une surveillance d'une consigne de distance minimale L_{MIN} de défauts (10, 11) et/ou de joints V et/ou une surveillance d'une consigne de nombre maximal Z_{MAX} de défauts (10, 11) et/ou de joints V en fonction de la longueur.

15. Installation de fabrication selon l'une des quatre revendications précédentes, **caractérisée en ce que** la deuxième ligne de fabrication (200) comprend un dispositif pour séparer de la ligne de fabrication (200), dans le sens d'avancement, un tronçon de longueur de profilé ne correspondant pas à une consigne de fabrication.
